**Europäisches Patentamt**

**European Patent Office**

**Office européen des brevets**

(11) Veröffentlichungsnummer: **0 281 844**

**A2**

(12) **EUROPÄISCHE PATENTANMELDUNG**

(21) Anmeldenummer: **88102704.9**

(22) Anmeldetag: **24.02.88**

(51) Int. Cl.⁴: **B01D 47/04**

(30) Priorität: **10.03.87 DE 3707576**

(43) Veröffentlichungstag der Anmeldung:
**14.09.88 Patentblatt 88/37**

(84) Benannte Vertragsstaaten:
**AT BE CH DE ES FR GB GR IT LI LU NL SE**

(71) Anmelder: **ARASIN GMBH**
**Weseler Strasse 100**
**D-4223 Voerde-Emmelsum(DE)**

(72) Erfinder: **Glass, Reinhard, Dipl.-Ing.**
**Grünstrasse 9**
**D-4223 Voerde 1(DE)**
Erfinder: **Penzel, Uwe, Dipl.-Ing.**
**Dinslakener Strasse 71**
**D-4223 Voerde 1(DE)**

(74) Vertreter: **Seiler, Siegfried**
**c/o DEUTSCHE SOLVAY-WERKE GmbH**
**Langhansstrasse 6 Postfach 11 02 70**
**D-5650 Solingen 11(DE)**

(54) **Verfahren und Vorrichtung zum Abtrennen von organisch-chemischen Bestandteilen.**

(57) Die vorliegende Erfindung betrifft ein Verfahren, eine Vorrichtung und ein chemisches Mittel zum Abtrennen von organisch-chemischen Bestandteilen aus einem Gas, den Schaum-Wasch-Turm durchströmt, dessen Durchtrittsfläche von tensidhaltigem Schaum abgedeckt wird, wobei der tensidhaltige Schaum aus Tensid und Flüssigkeit und/oder einem organisch-chemischen festen in dem Tensid löslichen oder dispergierbaren Stoff, sowie einem Gas besteht. Unter dem Eigendruck des kontinuierlich zugeführten Schaumes und des vom Schaum aufgenommenen Lösemittels sowie durch Zufuhr von Waschwasser und/oder Frischlösungen und dgl. werden die unteren Schaumbläschen zerstört, die sich bildende Flüssigkeit mit den organisch-chemischen Bestandteilen abgezogen und nachfolgend von der tensidhaltigen Flüssigkeit abgetrennt.

Das Gewichtsverhältnis in der eingesetzten - schaumbildenden Flüssigkeit von Tensid oder Tensidgemisch zu den anderen in der tensidhaltigen Flüssigkeit enthaltenen chemischen Stoffen, vorzugsweise Weichmacher beträgt 4 : 1 bis 1 : 250, vorzugsweise 1 : 5 bis 1 : 200.

Der Schaum-Wasch-Turm steht mit mindestens einer Destillationsvorrichtung über eine Kühlvorrichtung in Verbindung. Weiterhin besitzt die Destillationsvorrichtung einen Sammelbehälter und/oder einen weiteren Behälter für die tensidhaltige Flüssigkeit, die vorzugsweise im Kreislauf geführt wird.

## "Verfahren und Vorrichtungen zum Abtrennen von organisch-chemischen Bestandteilen"

Die vorliegende Erfindung betrifft Verfahren und Vorrichtungen zum Abtrennen von organisch-chemischen Bestandteilen aus einem Gas, das einen Kanal oder Behälter durchströmt, dessen Querschnitt oder dessen Durchtrittsfläche von Schaum abgedeckt wird und das organisch-chemische Bestandteile enthaltende Gas vor dem Durchtritt durch den Schaum mindestens durch ein Loch-, Gitter-und/oder Siebelement geleitet wird, auf das der Schaum aus einem an dem Kanal oder Behälter angeschlossenen Schaumerzeugungs- oder Schaumabgabegerät aufgebracht und/oder direkt in dem Kanal oder Behälter erzeugt wird, wobei eine spezielle schaumbildende Flüssigkeit und eine besondere Verfahrensweise unter Abtrennung und unter Verwendung einer Vorrichtungskombination durchgeführt wird.

Vorrichtungen zum Abscheiden von Schwebstoffteilchen aus einem Gas und somit auch Verfahren unter Verwendung dieser Vorrichtungen unter Einbringung von Schaum sind bereits bekannt. Nach der DE-PS 1 807 327 wird eine Vorrichtung zum Abscheiden von Schwebstoffteilchen aus einem Gas, das einen vertikalen Kanal aufwärts durchströmt, dessen Querschnitt durch ein Filtermedium in Form von Schaum abgedeckt ist, der auf einen im Filterraum des Kanals angeordneten Siebboden aufgetragen ist, eingesetzt, wobei eine Anordnung zum Abführen des Schwebstoffteilchen enthaltenden Filtermediums vorgesehen ist. Bei dieser Vorrichtung ist in bekannter Weise unabhängig vom zu reinigenden Gas ein Schaumerzeuger derart an den Filterraum angeschlossen, daß der Schaum auf dem Siebboden im Filterraum aufgebracht wird. Mit Hilfe dieser Vorrichtungen können jedoch nur Schwebstoffteilchen aus dem Gas abgetrennt werden und nicht im Gas enthaltende Lösemittel, Dämpfe oder sonstige organisch-chemische Verunreinigungen in der Gas-oder flüssigen Phase.

Ziel und Aufgabe der vorliegenden Erfindung war es, ein gegenüber dem Stand der Technik verbessertes Verfahren sowie Mittel und Vorrichtungen zu finden. Insbesondere sollte es ermöglicht werden, auch organisch-chemische Lösungsmittel aus Gasen zu entfernen und das organisch-chemische Lösungsmittel und/oder die - schaumbildende Flüssigkeit zurückzugewinnen. Das Verfahren und die Vorrichtungen sowie die dafür verwendeten Mittel sollten kontinuierlich oder teilkontinuierlich arbeiten können bzw. eingesetzt werden können und insofern umweltfreundlich sein, als sie mehrfach im Umlauf eingesetzt werden können.

Erfindungsgemäß wurde festgestellt, daß diesen Zielen und Aufgaben ein Verfahren und Vorrichtungen zum Abtrennen von organisch-chemischen Bestandteilen aus einem Gas, das einen Kanal oder Behälter (1) (Schaum-Wasch-Turm) durchströmt, dessen Querschnitt oder dessen Durchtrittsfläche von Schaum (19) abgedeckt wird, gerecht wird, wobei das organisch-chemische Bestandteile enthaltende Gas vor dem Durchtritt durch den Schaum mindestens durch ein Loch-, Gitter-und/oder Siebelement (2) geleitet wird, auf das der Schaum aus einem, an dem Kanal oder Behälter (Schaum-Wasch-Turm) angeschlossenen Schaumerzeugungs-und/oder Schaumabgabegerät aufgebracht oder direkt im Schaum-Wasch-Turm (1) gebildet wird.

Gemäß der Erfindung wird das organisch-chemische Lösemittel und/oder organisch-chemische Verunreinigungen enthaltende Gas durch einen tensidhaltigen Schaum, bestehend aus Tensid und einer organisch-chemischen Flüssigkeit und/oder einem organisch-chemischen festen, in dem Tensid löslichen oder dispergierbaren Stoff, vorzugsweise wasserfreien oder wasserarmen Tensidlösungen oder wasserfreien oder wasserarmen Tensid-Dispersionen, und einem eingeleiteten Gas oder Luft, geleitet. Dabei wird das organisch-chemische Lösemittel vom Schaum aufgenommen, unter dem Eigendruck des kontinuierlich zugeführten Schaumes und des vom Schaum aufgenommenen Lösemittels die Schaumbläschen, vorzugsweise die in den unteren Schichten befindlichen Schaumbläschen (bezogen auf die Durchtrittsrichtung des lösemittelhaltigen Gases, die ersten Schichten), unter Einwirkung der Schwerkraft und/oder durch Zufuhr von Waschwasser und/oder Frischlösungen und/oder chemische Bestandteile der verwendeten tensidhaltigen Flüssigkeit zur Aufkonzentration, zerstört sowie abgetrennt, vorzugsweise am Boden abgezogen, und nachfolgend von der tensidhaltigen Flüssigkeit, vorzugsweise tensidhaltigen Lösung oder tensidhaltigen Dispersion, abgetrennt. Das Gas oder die Luft wird vorzugsweise unter Verwendung eines geringen Überdruckes oder Unterdruckes eingeleitet. Der Überdruck beträgt zweckmäßig bis zu 3.000 Pa, vorzugsweise bis zu 1.000 Pa. Der Unterdruck beträgt zweckmäßig bis zu 5.000 Pa, vorzugsweise bis zu 1.000 Pa.

Gemäß dem erfindungsgemäßen Verfahren wird die das Lösemittel enthaltende, vom Schaum-Wasch-Turm abgezogene tensidhaltige Flüssigkeit einer Destillation, vorzugsweise fraktionierten Destillation oder einer Verdampfung, vorzugsweise in einem Dünnschicht-oder Fall stromverdampfer, unterworfen und von mindestens einem, vorzugsweise von allen darin enthaltenen organisch-chemischen Lösemitteln abgetrennt. Nach einer bevorzugten Ausführungsform der ·Erfindung wird gleichzeitig eine Abtrennung von evtl. im Abgas enthaltenen Staub durchgeführt. Die Staubabscheidung wird bevorzugt unter Verwendung einer Staubabscheidevorrichtung im Schaum-Wasch-Turm (1) durchgeführt.

Nach dem erfindungsgemäßen Verfahren enthält die tensidhaltige Flüssigkeit mindestens eine wasserlösliche, wasserunlösliche und/oder wasserschwerlösliche Verbindung, wobei das aus dem Abgas zu entfernende organisch-chemische Lösemittel in mindestens einer der in der tensidhaltigen Flüssigkeit enthaltenen Verbindung, vorzugsweise in mindestens einer wasserunlöslichen oder wasserschwerlöslichen Verbindung, löslich ist.

Nach einer anderen bevorzugten Ausführungsform des erfindungsgemäßen Verfahrens enthält die tensidhaltige Flüssigkeit neben dem Tensid oder Tensidgemisch mindestens eine organisch-chemische Flüssigkeit mit einem Siedepunkt über 470 K, vorzugsweise über 520 K und/oder einen in dem Tensid oder Tensidgemisch löslichen chemischen, bei Raumtemperatur festen Stoff. Dabei werden bevorzugt als organisch-chemische Flüssigkeiten oder Flüssigkeiten mit feindispergierten oder gelösten Feststoffgemischen solche eingesetzt, in denen die in dem Gas enthaltenen Lösemittel löslich sind. Die tensidhaltigen Flüssigkeiten sind bevorzugt wasserfrei oder wasserarm. Je nach Art der zu absorbierenden Gase enthalten sie nach einer Ausführungsform bis maximal 100 Gew.-% Wasser (bezogen auf 100 Gew.-% tensidhaltige Flüssigkeit).

Nach einer bevorzugten Ausführungsform besteht die tensidhaltige Flüssigkeit aus einem Gemisch von mindestens einem Tensid und mindestens einem flüssigen Weichmacher, Ester oder Ether und/oder festen, in dem Tensid löslichen und/oder dispergierbaren Weichmacher oder anderen flüssigen Ester oder Ether oder enthält diese.

Nach einer anderen bevorzugten Ausführungsform ist der flüssige Weichmacher oder andere flüssige Ester ganz oder teilweise durch mindestens einen flüssigen Ether mit mehr als 5 C-Atomen, vorzugsweise mehr als 8 C-Atomen, und/oder einem mehr als 5 C-Atome, vorzugsweise mehr als 8 C-Atome, enthaltenden Etherderivat, einem Polyether und/oder einem Hydroxygruppen enthaltenden Ether oder Polyether ersetzt.

Als Weichmacher werden vor allem solche Verbindungen eingesetzt, die in dem Tensid oder Tensidgemisch und/oder in den im Gas enthaltenen flüssigen oder gasförmigen organisch-chemischen Bestandteilen, vorzugsweise organisch-chemischen Lösungsmitteln, löslich sind. Weiterhin werden vorzugsweise bei Raumtemperatur und/oder der Verfahrenstemperatur flüssige Weichmacher eingesetzt. Vorzugsweise werden als Weichmacher z.B. Alkyl-, Aryl-oder Aralkylphthalate, vorzugsweise Dibutyl-und Benzylbutylphthalate, Alkylphosphate bzw. Phosphorsäureester, vorzugsweise Tributylphosphat, Adipate, vorzugsweise Benzyloctyladipat und/oder Diisononyladipat, Di-(2-äthylhexyl)-adipat; Stearate und Oleate z.B. Alkylstearate oder Alkyloleate, vorzugsweise Butyloleat, Butylstearat oder Amylstearat, Bis-(dimethylbenzyl)äther, p-Toluolsulfonsäureäthylester, Glycerinester, Glycerinäther oder höhermolekulare Glykoläther eingesetzt. Als Ersatz oder Teilersatz für Weichmacher können vorteilhaft gleiche Gewichtsmengen organisch-chemische flüssige Verbindungen mit mehr als $C_5$ auf der Basis von Ketonen, z.B. Ketonen mit Alkyl-, Aryl-oder Aralkylgruppen, vorzugsweise Benzophenon, Äthylbenzophenon und/oder Polyvinylalkyläther vorzugsweise Polyvinylmethyläther, verwendet werden. Nach einer Ausführungsform werden bevorzugt Gemische eingesetzt.

Nach einer bevorzugten Ausführungsform wird der Weichmacher oder ein anderer Ester, der Ether, das Etherderivat, der Polyether oder der Hydroxygruppen enthaltende Polyether durch mindestens einen Stabilisator und/oder mindestens ein Antioxidationsmittel stabilisiert.

Als Tenside werden die an sich bekannten Tenside eingesetzt. Das Gewichtsverhältnis von Tensid oder Tensidgemisch zu Weichmacher oder Weichmachergemisch beträgt 4 : 1 bis 1 : 250, vorzugsweise 1 : 5 bis 1 : 200.

Als Tenside werden bevorzugt nichtionische Tenside eingesetzt, vorzugsweise Alkyl-und Alkylphenylpolyethylenglykoläther Fettsäurealkylolamide, Saccharose-Fettsäureester oder Trialkylaminoxide und/oder fluorhaltige Tenside.

Nach einer bevorzugten Ausführungsform werden die nichtionischen Tenside im Gemisch mit ionischen Tensiden, vorzugsweise kationischen und/oder anionischen und/oder amphoteren Tensiden eingesetzt.

Nach einer bevorzugten Ausführungsform beträgt das Gewichtsverhältnis von nichtionischem Tensid zu ionischem Tensid 50 : 1 bis 1 : 8, vorzugsweise 25 : 1 bis 5 : 1.

Als Tenside oder Tensidgemische werden vorzugsweise verwendet Polyoxiethylen-Sorbitan-Oleat-Laurat und/oder Polyalkylenglykoläther und/oder Polyoxiethylen-Nonylphenol und/oder Polyoxiethylen-10-Oleylalkohol für sich allein oder in Kombination mit Isopropylamin-Dodecylbenzolsulfonat und/oder Alkylarylsulfonat oder fluorhaltige Tenside.

Nach einer anderen Ausführungsform wird neben dem oder anstelle des Tensid-Weichmachergemisches ein Gemisch von einem Tensid und einer organisch-chemische Flüssigkeit mit einem Siedepunkt von mehr als 470 K, vorzugsweise mehr als 520 K, und/oder einem Dampfdruck unter 1 Pa, vorzugsweise unter 0,1 Pa, verwendet oder mitverwendet.

Derartige organisch-chemische Flüssigkeiten sind je nach Art des eingesetzten Tensides, Weichmachers und/oder des zu entfernenden organisch-chemischen Lösungsmittels aliphatische Alkohole, vorzugsweise mehrwertigen Alkohole mit zwei oder mehreren Hydroxylgruppen mit $C_2$-$C_{16}$, vorzugsweise $C_3$-$C_{12}$, einschließlich Glykole, Glycerin sowie Glykolester und Glykoläther, flüssige Glycerinäther und/oder flüssige Polyglycerine.

Diese vorgenannten organisch-chemischen Flüssigkeiten werden nach dieser Ausführungsform in der Tensid-Weichmacher-Mischung bis zu 50 Gew.-%, vorzugsweise bis zu 30 Gew.-% (bezogen auf die gesamte Tensidflüssigkeit) eingesetzt oder anstelle der Weichmacher benutzt. Je nach Art des zu entfernenden organisch-chemischen Lösungsmittels können in der Tensidflüssigkeit 0,05 bis 10 Gew.-%, vorzugsweise 0,1 bis 4 Gew.-% Wasser, mitverwendet werden.

Bei dem erfindungsgemäßen Verfahren wird die im Dünnschicht-oder Fallstromverdampfer nichtverdampfte tensidhaltige Flüssigkeit abgezogen, vorzugsweise am Boden oder in der Nähe des Bodens abgezogen, gekühlt und unmittelbar oder nach Aufsättigung oder Einstellung der erforderlichen Konzentration der tensidhaltigen Flüssigkeit in den Kanal oder Behälter (Schaum-Wasch-Turm) und/oder Schaumgenerator zur Schaumbildung zurückgeführt. Das aus der Destillationsvorrichtung abdestillierte Lösungsmittel wird abgekühlt und gelangt in einen Tank oder Auffangbehälter. Das Lösungsmittel kann je nach Art und chemischer Zusammensetzung direkt eingesetzt (Lacklösungsmittel und dgl.) oder gereinigt bzw. der Entsorgung zugeführt werden.

Die Erfindung betrifft weiterhin ein mit Gasen oder Luft schaumbildendes, weiterhin ein chemisches Mittel zum Abtrennen von organisch-chemischen Bestandteilen, vorzugsweise Lösemitteln aus einem Gas, bestehend aus einer organisch-chemischen Flüssigkeit oder einem Flüssigkeitsgemisch, wobei die organisch-chemische Flüssigkeit oder das Flüssigkeitsgemisch aus einer tensidhaltigen Flüssigkeit, vorzugsweise tensidhaltigen Lösung oder Dispersion besteht und neben mindestens einem Tensid oder Tensidgemisch eine weitere organisch-chemische Flüssigkeit mit einem Siedepunkt von über 470 K, vorzugsweise über 520 K, und/oder einem Dampfdruck unter 5 Pa, vorzugsweise unter 1 Pa, enthält, sowie die Verwendung der tensidhaltigen oder Tensidgemisch enthaltenden Flüssigkeit, vorzugsweise tensidhaltigen Lösung oder Dispersion, und des daraus durch Gas-oder Luftzufuhr hergestellten Schaumes zur Absorption und/oder Trennung von organisch-chemische Lösungsmittel enthaltenden Gasen. Das Gewichtsverhältnis von Tensid oder Tensidge misch zu dem oder den anderen in der tensidhaltigen Flüssigkeit enthaltenden Stoff(en), vorzugsweise Weichmacher, Weichmachergemische oder weichmacherhaltigen Flüssigkeit oder weichmacherhaltigen Dispersion beträgt 4 : 1 bis 1 : 250, vorzugsweise 1 : 5 bis 1 : 200.

Die Erfindung betrifft weiterhin ein mit Gasen oder Luftschaum bildendes chemisches Mittel, bei dem der flüssige Weichmacher oder andere flüssige Ester ganz oder teilweise durch einen flüssigen Ether mit mehr als 5 C-Atomen, vorzugsweise mehr als 8 C-Atomen, und/oder einem mehr als 5 C-Atome, vorzugsweise mehr als 8 C-Atome, enthaltenden Etherderivat, Polyether und/oder einem Hydroxygruppen enthaltenden Ether oder flüssigen Polyether ersetzt ist.

Dabei wird bevorzugt das vorausgenannte Tensid-Weichmachergemisch verwendet.

Die Erfindung betrifft weiterhin Vorrichtungen zum Abtrennen von organisch-chemischen Bestandteilen aus einem Gas, bestehend aus einem Kanal oder Behälter (Schaum-Wasch-Turm) (1), mindestens einem Loch-, Gitter-und/oder Siebelement (2), das in dem Schaum-Wasch-Turm (1) angeordnet ist, vorzugsweise so angeordnet ist, daß der Querschnitt oder die Durchtrittsfläche des Turms oder Behälters von mindestens einem Loch-, Gitter-und/oder Siebelement abgedeckt wird, daß an dem Schaum-Wasch-Turm (1) unmittelbar oder mittelbar über mindestens eine Rohr-oder eine Schlauchleitung ein Schaumerzeugungs-(4) und/oder Schaumabgabegerät und/oder eine oberhalb mindestens eines Loch-, Gitter-und/oder Siebelementes befindliche Schaumabgabe-oder Schaumverteilungsvorrichtung (3) angeordnet ist, wobei der Schaum-Wasch-Turm (1) mit mindestens einer Destillationsvorrichtung, vorzugsweise einer Destillationsvorrichtung (10) und/oder Desorptionsvorrichtung für fraktionierte Destillation, oder einer Verdampfungsvorrichtung, vorzugsweise einem Dünnschicht-, Vakuum-oder Fallstromverdampfer, in Verbindung steht, in dem mindestens ein organisch-chemisches Lösungsmittel von dem Gas abgetrennt wird. Vorzugsweise ist an oder vor der Austrittsstelle für das gereinigte Gas eine Tropfabscheidungsvorrichtung angeordnet.

Nach einer bevorzugten Ausführungsform sind an der Destillations-und/oder Verdampfungsvorrichtung (10) oder die Desorptionsvorrichtung über mindestens eine Schlauch-und/oder Rohrleitung mindestens eine Kühlvorrichtung (11) und mindestens ein Behälter (12) für das abdestillierte bzw.

verdampfte organisch-chemische Lösemittel angeordnet. Die Destillations-und/oder Verdampfungsvorrichtung steht mit mindestens einem Sammelvorrichtungsteil-, einem Sammelbehälter und/oder einem weiteren Behälter (16,17) für die tensidhaltige Flüssigkeit in Verbindung. Der Behälter (16) für die tensidhaltige Flüssigkeit ist vorzugsweise unter Mitverwendung von mindestens einer Rohr-und/oder Schlauchleitung und mindestens einer Kühlvorrichtung (15) mit der Destillations-und/oder Verdampfungs-vorrichtung (10) verbunden. Der Sammelbehälter muß nicht unbedingt getrennt von dem Schaum-Wasch-Turm (1) sein, sondern ist nach einer Ausführungsform als Sammelvorrichtungsteil der unteren Teilvorrichtung des Schaum-Wasch-Turms (1) angeordnet.

Nach einer weiteren vorteilhaften Ausführungsform steht der Behälter für die tensidhaltige Flüssigkeit (16 und/oder 17) mittelbar mit einem Schaumerzeugungsgerät (4) und/oder einem Schaumgenerator und dem Schaum-Wasch-Turm (1) in Verbindung oder die tensidhaltige Flüssigkeit wird unmittelbar in den Turm und/oder Behälter (1) zur Schaumbildung zugeführt.

Der Behälter (16) für die tensidhaltige Flüssigkeit steht nach einer bevorzugten Ausführungsform mit einem Ansatzbehälter (17) zur Einstellung der gewünschten Einsatzkonzentration und dieser mit einem Schaumerzeugungsgerät (4) und/oder einem Schaumgenerator und dem Schaum-Wasch-Turm und/oder direkt mit dem Schaum-Wasch-Turm (1), vorzugsweise über eine Rohrleitung oder Schlauchleitung, in Verbindung. Nach einer anderen vorteilhaften Ausführungsform gelangt die abgezogene tensidhaltige Flüssigkeit zusammen oder getrennt mit unter Druck oder Unterdruck eingeführtem Gas, z. B. Luft, in den Schaum-Wasch-Behälter (1).

Oberhalb mindestens eines Siebbodens ist in einem Abstand, der größer ist als ein Viertel des Durchmessers des Siebbodens, vorzugsweise größer als der halbe Durchmesser des Siebbodens und/oder größer als die in dem Schaum-Wasch-Turm (1) eingebrachte Schaumhöhe, mindestens eine Verteilungsvorrichtung (7) zur Einführung tensidhaltiger Flüssigkeit in Form von Frischlösungen, Lösungen aus dem Ansatzbehälter und/oder zur Nachsättigung der einzelnen in der tensidhaltigen Flüssigkeit enthaltenden Bestandteile, angeordnet.

Nach einer anderen vorteilhaften Ausführungsform besteht der Schaum-Wasch-Turm (1) aus zwei oder mehreren, vorzugsweise vertikal übereinander angeordneten Behältern, die mindestens ein Loch-, Gitter-oder Sieb element (2), eine Schaumabgabe-oder Schaumverteilungseinrichtung (3) und/oder ein Schaumerzeugungsgerät (4) und/oder eine Verteilungsvorrichtung (7) zur Einführung tensidhaltiger Flüssigkeit (Frischlösung) oder deren Bestandteile, vorzugsweise aus einem Behälter (8), aufweisen und miteinander und/oder mit dem untersten Behälter in Verbindung stehen.

Nach einer bevorzugten Ausführungsform ist die Kühlvorrichtung (15) durch einen Gegenstromwärmeaustauscher ersetzt oder steht in Kombination mit mindestens einem Gegenstromwärmeaustauscher.

Nach einer weiteren bevorzugten Ausführungsform ist in dem Kanal oder Behälter (1) auf und/oder oberhalb mindestens eines Loch-, Gitter-und/oder Siebelementes (2) ein schaumtragendes und/oder schaumdurchlässiges Gerüst, Gitter, Netz, ein Plattenträger, Stangenträger, eine Füllkörperschicht und/oder eine Füllkörperpackung angeordnet.

Der Gegenstromwärmeautauscher dient somit zum Wärmeaustausch zwischen der heißen destillierten aus der Destillations-oder Verdampfungsvorrichtung 10 destillierten Flüssigkeit und der kalten Flüssigkeit vor Einbringung in die Destillations-oder Verdampfungsvorrichtung.

Ausführungsbeispiele für die tensidhaltige Flüssigkeit

1. 1,5 Gew.-% Fluortensid
98,5 Gew.-% Benzyloctyladipat
2. 1,5 Gew.-% Fluortensid
1,0 Gew.-% Ölsäurepolydiethanolamid
60,0 Gew.-% Benzyloctyladipat
37,5 Gew.-% Diisononyladipat
3. 1,0 Gew.-% Fluortensid
1,0 Gew.-% Kokosfettsäurediethanolamid
0,5 Gew.-% Trialkanolammoniumdodecylbenzolsulfonat
97,5 Gew.-% Benzyloctyladipat
4. 99,0 Gew.-% Polyethylenglykoldimethylether
1,0 Gew.-% Fluortensid
5. 50,0 Gew.-% Polyethylenglykoldimethylether
49,0 Gew.-% Tetraethylenglykoldimethylether
1,0 Gew.-% Fluortensid

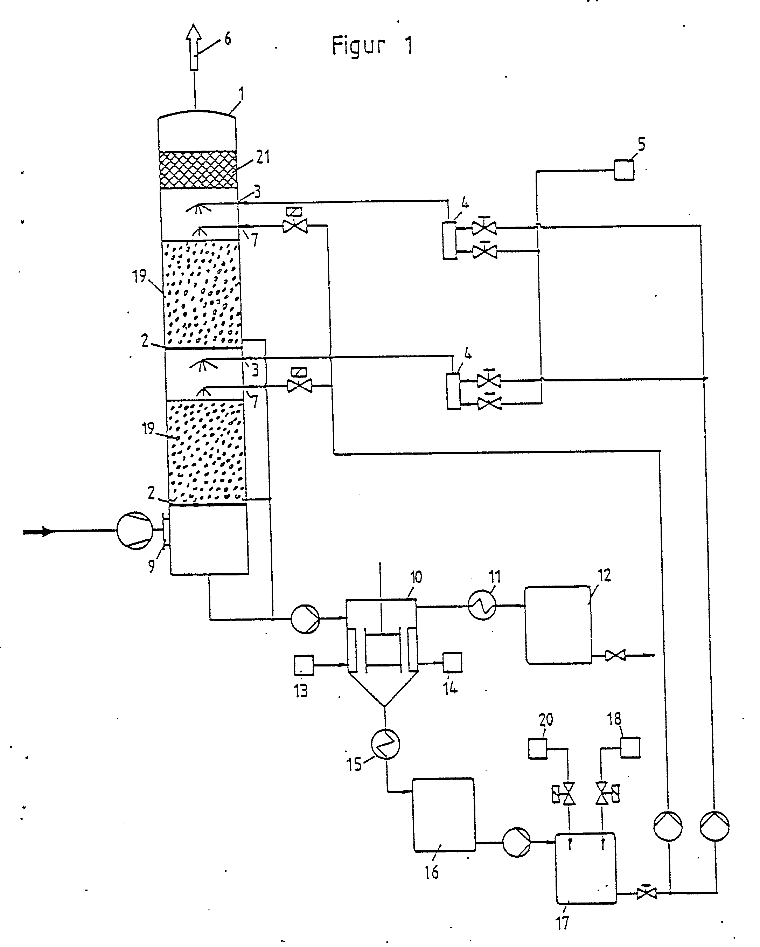

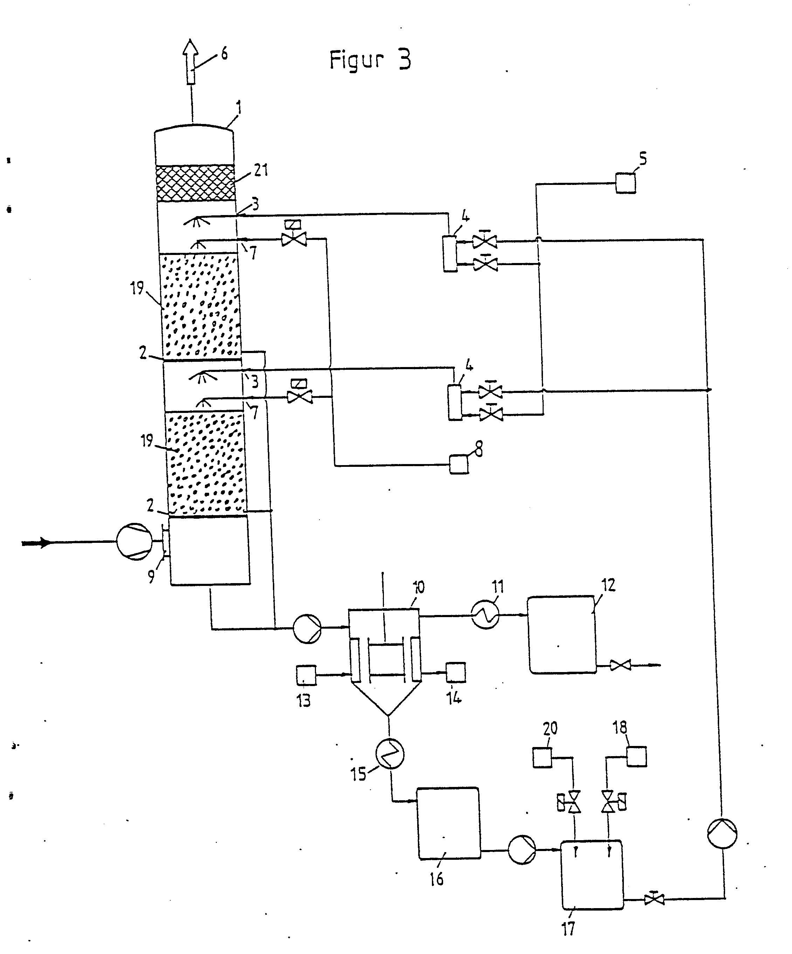

Die beigefügten Zeichnungen (Fig. 1, 2 und Fig. 3) stellen schematisch Ausführungsbeispiele zu dem erfindungsgemäßen Verfahren und den erfindungsgemäßen Vorrichtungen dar.

Unter Ziffer 1 ist der Kanal oder Behälter (Schaum-Wasch-Turm) dargestellt. Das Gas tritt in den Behälter bei dem Anschlußstutzen oder der Anschlußöffnung (9) ein, durchströmt ein oder mehrere Loch-, Gitter-und/oder Siebelemente (2), über die der Schaum (19) angeordnet ist. An dem Schaum-Wasch-Turm (1) sind ein oder mehrere Rohrleitungen zur Einbringung von Schaum oder von tensidhaltigen Flüssigkeiten oder Schaumabgabe-und/oder Schaumverteilungsvorrichtungen (3) angebracht. Nach einer Ausführungsform erfolgt die Schaumerzeugung im Schaum-Wasch-Turm (1) umittelbar. Der Schaum-Wasch-Turm (1) steht mit der Destillationsvorrichtung (10) für fraktionierte Destillation oder einer Verdampfungsvorrichtung, vorzugsweise mit einem Dünnschicht-oder Fallstromverdampfer, in Verbindung. Unter (13) ist die Zuführung des Heizmediums und unter (14) die Abfüllung des Heizmediums dargestellt. An der Destillations-und/oder Verdampfungsvorrichtung (10) ist über mindestens eine Schlauch-und/oder Rohrleitung eine Kühlvorrichtung (11) und ein Behälter (12) für das abdestillierte bzw. verdampfte organisch-chemische Lösemittel (Lösemitteltank) angeordnet. Die Destillations-und/oder Verdampfungsvorrichtung (10) steht mit einem weiteren Behälter (16) für die tensidhaltige Flüssigkeit (Tensidtank) unter Mitverwendung von einer Rohr-und/oder Schlauchleitung und einer Kühlvorrichtung (15) (Tensidkühler) mit der Destillations-und/oder Verdampfungsvorrichtung in Verbindung.

Der Behälter für die tensidhaltige Flüssigkeit (16) ist mit einem Ansatzbehälter (17) zur Einstellung der gewünschten Einsatzkonzentration und dieser mit einem Schaumerzeugungsgerät (4) und/oder einem Schaumgenerator und dem Turm und/oder Schaum-Wasch-Behälter (1), gekoppelt. Unter Ziffer (5) ist ein Gasdruckgerät (Preßluftgerät) dargestellt. Der Ansatzbehälter steht bevorzugt in Kombination mit Behältern für die Ausgangsstoffe (18) und/oder (20) für ein oder mehrere Bestandteile der tensidhaltigen Flüssigkeit.

Oberhalb des Siebbodens ist in einem bestimmten Abstand mindestens eine Verteilungsvorrichtung (7) zur Einführung tensidhaltiger Flüssigkeit in Form von Frischlösungen, Lösungen aus dem Ansatzbehälter und/oder zur Nachsättigung der einzelnen in der tensidhaltigen Flüssigkeit enthaltenen Bestandteile, angeordnet.

Zur Regulierung der Schaumhöhe, der Schaumbläschengröße und der Schaumzusammensetzung wird nach einer vorteilhaften Ausführungsform zusätzlich aus einem Behälter (8) bei Ziffer 7 tensidhaltige Flüssigkeit (Frischlösung) eingebracht und/oder Bestandteile der verwendeten tensidhaltigen Flüssigkeit (zur Aufkonzentration oder Schaumsteuerung). Das im unteren Teil (9) des Schaum-Wasch-Turms (1) eintretende Gas tritt in der Nähe des oberen Teil des Schaum-Wasch-Turms (1) unter Ziffer 6 aus, nachdem das Gas die Tropfenabscheidungs-Vorrichtung (21) passiert hat.

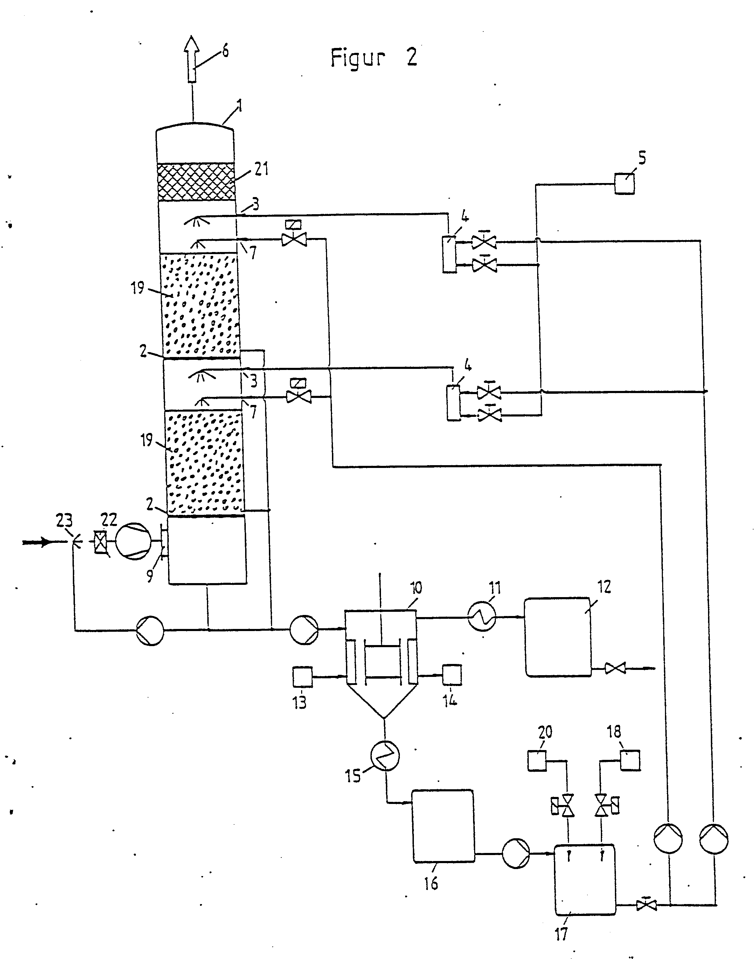

Unter Ziffer (23) in Fig. 2 ist eine Voreindüsung der tensidhaltigen Flüssigkeit in das eintretende Gas (9) dargestellt. Die Ziffer (22) entspricht einem Drallregler zur Regelung der eintretenden Gasmenge und zur Verteilung der unter Ziffer (23) eingedüsten Flüssigkeit.

**Ansprüche**

1. Verfahren zum Abtrennen von organisch-chemischen Bestandteilen aus einem Gas, das einen Kanal oder Behälter (1) (Schaum-Wasch-Turm) durchströmt, dessen Querschnitt oder dessen Durchtrittsfläche von Schaum abgedeckt wird und das organisch-chemische Bestandteile enthaltende Gas vor dem Durchtritt durch den Schaum mindestens durch ein Loch-, Gitter-und/oder Siebelement geleitet wird, auf das der Schaum aus einem, an dem Schaum-Wasch-Turm (1) angeschlossenen Schaumerzeugungs-(4) und/oder Schaumabgabegerät aufgebracht oder direkt im Kanal oder Behälter gebildet wird, dadurch gekennzeichnet, daß das organisch-chemische Lösemittel enthaltende Gas durch einen tensidhaltigen Schaum (19), bestehend aus Tensid und Flüssigkeit und/oder einem organisch-chemischen festen, in dem Tensid löslichen oder dispergierbaren Stoff, vorzugsweise wasserfreien oder wasserarmen Tensidlösungen oder wasserfreien oder wasserarmen Tensid-Dispersionen, und einem eingeleiteten Gas oder Luft, geleitet wird und das organisch-chemische Lösemittel vom Schaum aufgenommen wird, daß unter dem Eigendruck des kontinuierlich zugeführten Schaumes und des vom Schaum aufgenommenen Lösemittels die Schaumbläschen, vorzugsweise die in den unteren Schichten befindlichen Schaumbläschen (bezogen auf die Durchtrittsrichtung des lösemittelhaltigen Gases) unter Einwirkung der Schwerkraft und/oder durch Zufuhr von Waschwasser und/oder Frischlösungen zerstört sowie abgetrennt, vorzugsweise am Boden abgezogen und nachfolgend von der tensidhaltigen Flüssigkeit abgetrennt werden.

2. Verfahren nach Anspruch 1, dadurch gekennzeichnet, daß die das Lösemittel enthaltende, vom Schaum-Wasch-Turm abgezogene tensidhaltige Flüssigkeit einer Destillation, vorzugsweise fraktionierten Destillation oder einer Verdampfung, vorzugsweise in einem Dünnschicht-oder Fallstromverdampfer (10), unterworfen und von mindestens einem, vorzugsweise von allen darin enthaltenen organisch-chemischen Lösemitteln getrennt wird.

3. Verfahren nach einem oder mehreren Ansprüche 1 und 2, dadurch gekennzeichnet, daß die tensidhaltige Flüssigkeit neben dem Tensid oder Tensidgemisch mindestens eine organisch-chemische Flüssigkeit mit einem Siedepunkt über 470 K, vorzugsweise über 520 K, sowie gegebenenfalls einen in dem Tensid oder Tensidgemisch löslichen oder dispergierbaren, bei Raumtemperatur festen Stoff und/oder bis zu 10 Gew.-% Wasser enthält.

4. Verfahren nach einem oder mehreren Ansprüche 1 bis 3, dadurch gekennzeichnet, daß die tensidhaltige Flüssigkeit aus einem Gemisch von mindestens einem Tensid und mindestens einem flüssigen Weichmacher oder einem anderen flüssigen Ester, sowie gegebenenfalls einem festen in dem Tensid löslichen und/oder dispergierbaren Weichmacher oder anderen flüssigen Ester besteht oder diese enthält.

5. Verfahren nach einem oder mehreren Ansprüche 1 bis 4, dadurch gekennzeichnet, daß der flüssige Weichmacher oder andere flüssige Ester ganz oder teilweise durch einen flüssigen Ether mit
mehr als 5 C-Atomen, vorzugsweise
mehr als 8 C-Atomen,
und/oder einem
mehr als 5 C-Atome, vorzugsweise
mehr als 8 C-Atome,
enthaltenden Etherderivat, einem Polyether und/oder einem Hydroxygruppen enthaltenden Ether oder Polyether ersetzt ist.

6. Verfahren nach einem oder mehreren der Ansprüche 1 bis 5, dadurch gekennzeichnet, daß die im Dünnschicht-oder Fallstromverdampfer nichtverdampfte tensidhaltige Flüssigkeit abgezogen, vorzugsweise am Boden oder in der Nähe des Bodens abgezogen, gekühlt und unmittelbar oder nach Aufsättigung oder Einstellung der erforderlichen Konzentration der tensidhaltigen Flüssigkeit, in den Schaum-Wasch-Turm und/oder Schaumgenerator zum Schaumbildung zurückgeführt wird.

7. Verfahren nach einem oder mehreren der Ansprüche 1 bis 6, dadurch gekennzeichnet, daß der Weichmacher oder ein anderer Ester, der Ether, das Etherderivat, der Polyether oder der Hydroxygruppen enthaltende Polyether durch mindestens einen Stabilisator und/oder mindestens ein Antioxidationsmittel stabilisiert wird.

8. Verfahren nach einem oder mehreren Ansprüche 1 bis 7, dadurch gekennzeichnet, daß das aus der Destillationsvorrichtung (10) abdestillierte Lösungs mittel abgekühlt und in einen Sammelbehälter oder Tank (12) abgeleitet wird.

9. Mit Gasen oder Luft schaumbildendes chemisches Mittel zum Abtrennen von organisch-chemischen Bestandteilen, vorzugsweise Lösemitteln aus einem Gas, bestehend aus einer organischen-chemischen Flüssigkeit oder einem Flüssigkeitsgemisch, dadurch gekennzeichnet, daß die organisch-chemische Flüssigkeit oder das Flüssigkeitsgemisch aus einer tensidhaltigen Flüssigkeit, vorzugsweise tensidhaltigen Lösung oder Dispersion besteht und neben mindestens einem Tensid oder Tensidgemisch eine weitere organisch-chemische Flüssigkeit mit einem Siedepunkt von über 470 K, vorzugsweise über 520 K, sowie gegebenenfalls einen in dem Tensid oder Tensidgemisch löslichen oder dispergierbaren bei Raumtemperatur festen Stoff enthält.

10. Mit Gasen oder Luft schaumbildendes chemisches Mittel nach Anspruch 9, dadurch gekennzeichnet, daß das Gewichtsverhältnis von Tensid oder Tensidgemisch zu dem oder den anderen in der tensidhaltigen Flüssigkeit enthaltenen chemischen Stoff(en), vorzugsweise Weichmacher, Weichmachergemische oder weichmacherhaltigen Flüssigkeit oder weichmacherhaltigen Dispersion, 4 : 1 bis 1 : 250, vorzugsweise 1 : 5 bis 1 : 200, beträgt.

11. Mit Gasen oder Luftschaum bildendes chemisches Mittel nach Ansprüchen 9 und 10, dadurch gekennzeichnet, daß der flüssige Weichmacher oder andere flüssige Ester ganz oder teilweise durch einen flüssigen Ether mit
mehr als 5 C-Atomen, vorzugsweise
mehr als 8 C-Atomen,
und/oder einem
- mehr als 5 C-Atome, vorzugsweise
mehr als 8 C-Atome,
enthaltenden Etherderivat, Polyether und/oder einem Hydroxygruppen enthaltenden Ether oder flüssigen Polyether ersetzt ist.

12. Verwendung einer tensidhaltigen oder ein Tensidgemisch enthaltenden Flüssigkeit, vorzugsweise tensidhaltigen Lösung oder Dispersion, und des daraus durch Gas-oder Luftzufuhr hergestellten Schaumes zur Absorption und/oder Trennung von organisch-chemische Lösungsmittel enthaltenden Gasen.

13. Verwendung nach Anspruch 12, dadurch gekennzeichnet, daß ein Tensid-Weichmachergemisch eingesetzt wird mit einem Gewichtsverhältnis des Tensids oder Tensidgemisches zu dem Weichmacher oder der Weichmachermischung, der bzw. die ganz oder teilweise durch einen flüssigen Ether oder Ester mit
mehr als 5 C-Atomen, vorzugsweise
mehr als 8 C-Atomen,
und/oder einem
mehr als 5 C-Atomen, vorzugsweise
mehr als 8 C-Atomen,
enthaltenden Esterderivat, Polyether und/oder einem Hydroxygruppen enthaltenden Ether oder flüssigen Polyether ersetzt ist, sowie gegebenenfalls anderen in der tensidhaltigen Flüssigkeit enthaltenden chemischen Stoffen von 4 : 1 bis 1 : 250, vorzugsweise 1 : 5 bis 1 : 200.

14. Vorrichtungen zum Abtrennen von organisch-chemischen Bestandteilen aus einem Gas, bestehend aus einem Turm oder Behälter (Schaum-Wasch-Turm) (1), mindestens einem Loch-, Gitter-und/oder Siebelement (2), das in dem Schaum-Wasch-Turm angeordnet ist, vorzugsweise so angeordnet ist, daß der Querschnitt oder die Durchtrittsfläche des Schaum-Wasch-Turms (1) von mindestens einem Loch-, Gitter-und/oder Siebelement abgedeckt wird, daß an dem Schaum-Wasch-Turm unmittelbar oder mittelbar über mindestens eine Rohr-oder Schlauchleitung ein Schaumerzeugungs- und/oder Schaumabgabegerät (4) und/oder eine oberhalb mindestens eines Loch-, Gitter-und/oder Siebelementes befindliche Schaumabgabe-oder Schaumverteilungsvorrichtung (3) angeordnet ist, dadurch gekennzeichnet, daß der Schaum-Wasch-Turm mit mindestens einer Destillationsvorrichtung (10) und/oder Desorptionsvorrichtung, vorzugsweise einer Destillationsvorrichtung für fraktionierte Destillation und/oder einer Verdampfungsvorrichtung, vorzugsweise einem Dünnschicht-, Vakuum- oder Fallstromverdampfer, in Verbindung steht, in dem mindestens ein organisch-chemisches Lösungsmittel, vorzugsweise alle darin enthaltene Lösungsmittel, von dem Gas abgetrennt wird und daß an oder vor der Austrittsstelle für das gereinigte Gas eine Tropfenabscheidungsvorrichtung angeordnet ist.

15. Vorrichtungen nach Anspruch 14, dadurch gekennzeichnet, daß an der Destillations-und/oder Verdampfungsvorrichtung über mindestens eine Schlauch-und/oder Rohrleitung mindestens eine Kühlvorrichtung (11) und mindestens ein Behälter (12) für das abdestillierte bzw. verdampfte organisch-chemische Lösemittel angeordnet sind und die Destillations-und/oder Verdampfungsvorrichtung mit einem Sammelbehälter und/oder mindestens einem weiteren Behälter (16, 17) für die tensidhaltige Flüssigkeit in Verbindung steht, wobei der Behälter für die tensidhaltige Flüssigkeit, vorzugsweise unter Mitverwendung von mindestens einer Rohr- und/oder Schlauchleitung und mindestens einer Kühlvorrichtung (15) mit der Destillations-und/oder Verdampfungsvorrichtung (10) in Verbindung steht.

16. Vorrichtungen nach einem oder mehreren der Ansprüche 14 und 15, dadurch gekennzeichnet, daß der Sammelbehälter und/oder der Behälter für die tensidhaltige Flüssigkeit (16, 17) unmittelbar oder mittelbar mit einem Schaumerzeugungsgerät (4) und/oder einem Schaumgenerator und dem Schaum-Wasch-Turm (1) in Verbindung steht.

17. Vorrichtungen nach einem oder mehreren der Ansprüche 14 bis 16, dadurch gekennzeichnet, daß der Behälter für die tensidhaltige Flüssigkeit (16) mit einem Ansatzbehälter (17) zur Einstellung der gewünschten Einsatzkonzentration und dieser mit einem Schaumerzeugungsgerät (4) und/oder einem Schaumgenerator und/oder dem Schaum-Wasch-Turm (1), vorzugsweise über eine Rohrleitung oder Schlauchleitung in Verbindung steht.

18. Vorrichtungen nach einem oder mehreren der Ansprüche 14 bis 17, dadurch gekennzeichnet, daß oberhalb mindestens eines Siebbodens in einem Abstand, der größer ist als ein Viertel des Durchmessers des Siebbodens, vorzugsweise größer ist als der halbe Durchmesser des Siebbodens und/oder größer ist als die in dem Schaum-Wasch-Turm (1) eingebrachte Schaumhöhe, mindestens eine Verteilungsvorrichtung (7) zur Einführung tensidhaltiger Flüssigkeit in Form von Frischlösungen aus einem Behälter (8), Lösungen aus dem Ansatzbehälter (17) und/oder zur Nachsättigung der einzelnen in der tensidhaltigen Flüssigkeit enthaltenen Bestandteile, angeordnet ist.

19. Vorrichtungen nach einem oder mehreren der Ansprüche 14 bis 18, dadurch gekennzeichnet, daß der Schaum-Wasch-Turm (1) aus mehreren, vorzugsweise vertikal übereinander angeordneten Schaum-Wasch-Turm-Elementen, die mindestens ein Loch-, Gitter-oder Siebelement (2), eine Schaumabgabe-oder Schaumverteilungseinrichtung (3) und/oder eine Verteilungsvorrichtung (9) aufweisen und miteinander und/oder mit dem untersten Behälter in Verbindung stehen, besteht.

20. Vorrichtung nach einem oder mehreren der Ansprüche 14 bis 19, dadurch gekennzeichnet, daß die Kühlvorrichtung (15) durch einem Gegenstromwärmeaustauscher ersetzt ist oder in Kombination mit mindestens einem Gegenstromwärmeaustauscher steht.

21. Vorrichtung nach einem oder mehreren der Ansprüche 14 bis 20, dadurch gekennzeichnet, daß in dem Kanal oder Behälter (1) auf und/oder oberhalb mindestens eines Loch-, Gitter-und/oder Siebelementes (2) ein schaumtragendes und/oder -schaumdurchlässiges Gerüst, Gitter, Netz, ein Plattenträger, Stangenträger, eine Füllkörperschicht und/oder eine Füllkörperpackung angeordnet ist.

Figur 1

0 281 844

BAD ORIGINAL

Figur 2

Figur 3